# EUROPÄISCHE PATENTSCHRIFT

(11) **EP 3 587 164 B1**
(45) Veröffentlichungstag und Bekanntmachung des Hinweises auf die Patenterteilung: **20.12.2023**
(21) Anmeldenummer: 18020275.6
(22) Anmeldetag: 22.06.2018
(51) Int. Cl.: B60L 3/00, B60L 53/30, B60L 53/31, B60L 53/65, B60L 53/68

(54) **SYSTEM MIT ZENTRALEINHEIT UND MEHREREN GLEICHSPANNUNGSLADESÄULEN ZUM LADEN VON ELEKTROFAHRZUEGEN**
SYSTEM WITH CENTRAL UNIT AND PLURALITY OF DIRECT VOLTAGE CHARGING COLUMNS FOR CHARGING ELECTRIC VEHICLES
SYSTÈME AVEC UNITÉ CENTRALE ET PLURALITÉ DES COLONNES DE CHARGE À COURANT CONTINU DESTINÉES À CHARGER DES VÉHICULES ÉLECTRIQUES

(43) Veröffentlichungstag der Anmeldung: 01.01.2020
(73) Patentinhaber: eLoaded GmbH, 6020 Innsbruck (AT)
(72) Erfinder: Steinbacher, Frank, A-6020 Innsbruck (AT)
(74) Vertreter: Kienle, Thomas

(56) Entgegenhaltungen:
- EP-A1- 2 875 985
- EP-A1- 2 882 066
- EP-A1- 3 321 120
- EP-A2- 2 388 884
- WO-A1-03/047904
- WO-A1-2017/137234
- WO-A2-2011/145939
- DE-A1-102011 079 430
- DE-A1-102014 115 019
- DE-A1-102015 110 023
- JP-A- H05 276 673
- US-A1- 2014 084 843

## Beschreibung

### TECHNISCHES GEBIET

Die vorliegende Erfindung betrifft eine Gleichspannungsladesäule zum Laden eines Elektrofahrzeugs.

### STAND DER TECHNIK

Zum Laden von Elektrofahrzeugen mit Strom werden im Allgemeinen Ladevorrichtungen eingesetzt. Im Heimbereich nennt man diese Wallbox, da sie meistens an einer Hauswand befestigt sind. Im öffentlichen Raum werden häufig so genannte Ladesäulen aufgestellt. Wallboxen und Ladesäulen haben meist eine oder mehrere Steckdosen. Die Steckdosen werden auch als Ladepunkte bezeichnet. Ein Ladekabel mit Stecker ist an der Steckdose anschließbar oder bereits angeschlagen und verbindet das Elektrofahrzeug elektrisch mit der Ladevorrichtung.

Es sind verschiedene Steckverbindungstypen bekannt, so z. B.:
- Schuko-Stecker;
- IEC 62196-2 Typ 1, eine Einphasen-Wechselstromverbindung;
- IEC 62196-2 Typ 2, eine Ein- und Dreiphasenwechselstromverbindung und
- IEC 62196-2 Typ 3, eine Ein- und Dreiphasenwechselstromverbindung mit Schutzmechanismen

Typ-2-Steckverbindungen werden überwiegend in Europa eingesetzt und erlauben auch das Laden mit Gleichstrom bei Leistungsabgaben bis 120kW (Typ-2 Tesla - Gleichstromladen über Typ2-Stecker.

Beim Laden mit Wechselstrom ist in den Elektrofahrzeugen meist ein Wandler vorgesehen, der den Wechselstrom in den für das Batterieladen notwendigen Gleichstrom wandelt. Für schnelles Laden mit hoher Leistung wäre jedoch ein nachteilig großer und teurer Wandler in jedem Elektrofahrzeug notwendig. Deshalb setzt die Industrie beim Schnellladen zunehmend auf Gleichspannungs- bzw. Gleichstromladesäulen, auch DC-Säule, DC-Ladesäule oder DC-Schnell-Lader genannt.

Folgende Schnelllade-Steckverbindungen haben sich bisher etabliert:
- CCS, Combined Charching System, zu Deutsch: kombiniertes Ladesystem, ist ein von deutschen Automobilherstellern entwickelter und seit 2014 EU-weit bindender Standard, der das Laden mit Wechselstrom und Gleichstrom beschreibt. Hierbei ist ein elektrofahrzeugseitiger Stecker für das Wechselstromladen mit einem Typ-2-Stecker und für das Gleichstromladen mit zwei zusätzlichen Hochleistungs-Gleichstromlade-Pins ausgestattet.
- Chademo ist ein Standard, der u. a. von japanischen Automobilherstellern entwickelt wurde.
- Tesla Supercharger ist eine proprietäre Technologie von Tesla für das Laden von Tesla-Elektrofahrzeugen.

Aus der deutschen Patentanmeldung DE102015110023 ist ferner eine Ladestation bzw. Zentraleinheit zum Laden eines Plug-In-Kraftfahrzeuges an einer Ladesäule bekannt, wobei diese Ladestation einen Leistungstransformator, mehrere Gleichrichtermodule und einen rückspeisefähigen Pufferspeicher umfasst. Die Patentanmeldung WO 2017/127234 A1 beschreibt das Problem, dass eine kommunizierte maximale Leistungsaufnahme bei einem Ladevorgang nicht erreicht wird. Als Lösung wird u.a. eine auf einem Backend-Server implementierte Energiemanagementeinrichtung zur Steuerung eines in einem Elektrofahrzeug integrierten Ladesteuergeräts mit einem Ladeprofil vorgeschlagen, wobei das Elektrofahrzeug an einer Ladestation angeschlossen ist. Eine Energiemanagementeinrichtung kann per Internet mit dem Ladesteuergerät über eine Funkschnittstelle für mobile Datenübertragung oder über die Ladestation kommunizieren.

Die Offenlegungsschrift DE 10 2011 079 430 A1 beschreibt eine DC-Ladestation zum gleichzeitigen Aufladen mehrerer Energiespeichereinrichtungen. Diese bekannte DC-Ladestation weist eine DC-Quelle zur Erzeugung einer DC-Spannung auf. Die DC-Quelle speist ein Verteilsystem, an das mehrere DC-Ladepunkte angeschlossen sind. An die DC-Ladepunkte sind aufzuladende Energiespeichereinreichungen anbindbar. Die DC-Ladepunkte können eine für jede angebundene Energiespeichereinrichtung eine geeignete Ladespannung bereitstellen. Dazu umfasst die bekannte DC-Ladestation einen DC/DC-Steller, der die von der DC-Quelle erzeugte DC-Spannung in die von der Energiespeichereinrichtung benötigte DC-Ladespannung wandelt. WO2011145939 A2 offenbart ein System zum Laden von Elektrofahrzeugen, wobei mehrere DC/DC-Steller über eine Schaltmatrix seriell oder in Reihe geschaltet sind.

### AUFGABE DER ERFINDUNG

Somit besteht die Aufgabe der vorliegenden Erfindung darin, das Zusammenspiel einer Mehrzahl von Gleichspannungsladesäulen mit einer Zentraleinheit zu verbessern.

### OFFENBARUNG DER ERFINDUNG

Erfindungsgemäß wird ein System mit einer Zentraleinheit und mehreren Gleichspannungsladesäulen zum Laden eines Elektrofahrzeugs gemäß Anspruch 1 bereitgestellt.

Jede Gleichspannungsladesäule umfasst zwei Gleichspannungsladesäulen-Eingangsanschlüsse für eine Eingangsgleichspannung mit einem ersten Spannungsbereich, wobei die Eingangsgleichspannung von einer Zentraleinheit bereitgestellt wird. Ferner umfasst die erfindungsgemäße Gleichspannungsladesäule einen ersten Gleichspannungswandler zum Wandeln der Eingangsgleichspannung in eine Ausgangsgleichspannung mit einem zweiten Spannungsbereich, sowie zwei Gleichspannungsladesäulen-Ausgangsanschlüsse zum Bereitstellen der Ausgangsgleichspannung an das Elektrofahrzeug. Die erfindungsgemäße Gleichspannungsladesäule umfasst ferner eine Steuereinheit mit einer ersten Kommunikationsschnittstelle zur Kommunikation zwischen der Gleichspannungsladesäule und der Zentraleinheit.

Gleichspannungsladesäulen werden beispielsweise auch als Gleichstromladesäulen, DC-Säule, DC-Ladesäule oder DC-Schnell-Lader bezeichnet.

Der Begriff Elektrofahrzeug soll vorzugsweise folgende Bedeutungen umfassen:
- Reine Elektrofahrzeuge, angetrieben allein mit Akkustrom, englische Bezeichnung Battery Electric Vehicle, auch Batterieelektrische Fahrzeuge genannt;
- Fahrzeuge mit Elektroantrieb und Range-Extender;
- Hybridfahrzeuge, englisch Hybrid Electric Vehicle;
- Plug-In-Hybride, englisch Plug-In Hybrid Electric Vehicle und
- Brennstoffzellenfahrzeuge, englisch Fuel Cell Vehicle.

Laden bezeichnet dabei vorzugsweise einem Akkumulator elektrische Energie zum Aufladen zuzuführen. Akkumulatoren können auch als Akku oder Batterie bezeichnet werden. Ihr Einsatz in einem Elektrofahrzeug wird vorzugsweise als Antriebs- oder Traktionsbatterie umschrieben.

Es ist generell wünschenswert Batterien schnell aufladen zu können. Insbesondere auf langen Fahrten, die die Reichweite einer Elektrofahrzeugbatterie überschreitet, ist ein schnelles Laden von Vorteil. Eine Batterie kann entweder über lange Zeit mit wenig Leistung geladen werden oder mit hoher Leistung in kurzer Zeit; die Ladeenergie ist gleich Leistung mal Ladezeit.

Ein Gleichspannungswandler, auch DC-DC-Wandler genannt, englisch DC-DC Converter, bezeichnet im Allgemeinen eine elektrische Schaltung, die eine am Eingang zugeführte Gleichspannung in eine Gleichspannung mit höherem, niedrigerem oder invertiertem Spannungsniveau umwandelt. Gleichspannungswandler weisen typischerweise zwei Eingangs- und zwei Ausgangsanschlüsse auf.

In einer bevorzugten Ausführungsform überträgt oder empfängt die Steuereinheit über die erste Kommunikationsschnittstelle wenigstens eine der folgenden Informationen:
- Status der Gleichspannungsladesäule und/oder
- Daten über die maximal von der Gleichspannungsladesäule abgegebenen Leistung und/oder
- Ladeenergiewert und/oder
- Ladezeitwert und/oder
- Elektrofahrzeugidentifikationsinformation und/oder
- Softwareupdate-Daten.

Der Status der Gleichspannungssäule umfasst dabei z.B.:
- eine Information darüber, ob ein Elektrofahrzeug zum Laden angeschlossen ist oder nicht und/oder
- eine Information darüber, ob ein Elektrofahrzeug gerade geladen wird und/oder
- eine Information über eine Verschaltung ein oder mehrerer der Gleichspannungswandler.
- die verfügbare Energie, Leistung, Spannung, Betriebszustand und zukünftige Betriebszustände der Zentraleinheit (z.B. Energieverfügbarkeitsprognosen auf Grund der Energielieferverbindungen (Photovoltaik-Strom, Biomassestromproduktion)).

Der Ladeenergiewert umfasst vorzugsweise das Produkt aus Ladezeit und Ladeleistung. Der Ladeenergiewert und/oder der Ladezeitwert können als Grundlage zur Berechnung des Verkaufspreises für die Batterieladung und/oder als Kundeninformation dienen.

Anhand der Elektrofahrzeugidentifikationsinformation kann die Zentraleinheit oder die Gleichspannungsladesäule ermitteln, welche maximale Ladeleistung für das jeweils angeschlossene Elektrofahrzeug zulässig ist und eine entsprechende maximale Leistung abgeben und diese der Gleichspannungsladesäule zur Verfügung stellen.

Die erfindungsgemäße Gleichspannungsladesäule kann ferner die Energieeffizienz verbessern.

Gemäß einer weiteren bevorzugten Ausführungsform kann die Steuereinheit an der ersten Kommunikationsschnittstelle einen seriellen Kommunikationsstandard, insbesondere Ethernet, unterstützen. Leitungsgebundene Kommunikation, wie Ethernet, kann gegenüber drahtloser Kommunikation zwischen Zentraleinheit und Gleichspannungsladesäule von Vorteil sein, um z.B. den Einfluss von in der Gleichspannungsladesäule oder der Umgebung erzeugter Hochfrequenz-Störung zu verringern. Ethernet-Kabel, Router und Netzwerkkarten sind im Allgemeinen preiswert und erlauben hohe Datenraten; häufig sind PCs und Industrierechner bereits serienmäßig mit einer Ethernet-Schnittstelle ausgestattet und können für die Steuereinheit bzw. die Zentraleinheit eingesetzt werden. Für Ethernet-Kupferkabel sind vorteilhafte Linklängen von bis zu ca. 100 m möglich, mit Ethernet-Glasfaserkabeln üblicherweise noch weit mehr.

In einer weiteren vorteilhaften Weiterbildung der Erfindung umfasst die Steuereinheit eine zweite Kommunikationsschnittstelle zur Kommunikation zwischen der Gleichspannungsladesäule und dem Elektrofahrzeug.

Über die zweite Kommunikationsschnittstelle können insbesondere die Steuereinheit und ein Batteriemanagementsystem des Elektrofahrzeugs anhand eines Kommunikationsprotokolls miteinander kommunizieren.

Das Batteriemanagementsystem kann z.B.:
- den aktuellen Ladezustand der Elektrofahrzeugbatterie und/oder
- die Gleichspannung und maximale Ladestromstärke bzw. maximale Ladeleistung und/oder
- Momentanspannung der Batterie und/oder
- Batterietemperatur
an die Steuereinheit übermitteln.

Über die erste Kommunikationsschnittstelle kann die Steuereinheit Softwareupdate-Daten empfangen, um ein Kommunikationsprotokoll für die zweite Kommunikationsschnittstelle zu aktualisieren. So kann die Gleichspannungsladesäule z. B. auch stets mit neuesten Elektrofahrzeugen während der Ladung kommunizieren.

Gemäß einer Weiterbildung kann die Steuereinheit an der zweiten Kommunikationsschnittstelle wenigstens zwei verschiedene Kommunikationsprotokolle unterstützen, z.B. Chademo und/oder CCS und/oder Tesla Supercharger. An einer derartigen Gleichspannungsladesäule können so Elektrofahrzeuge mit verschiedenen Steckverbindungen an einem Ladepunkt geladen werden.

Die Gleichspannungsladesäule ist mit einem zweiten Gleichspannungswandler ausgestattet, der wahlweise zum ersten Gleichspannungswandler parallel oder in Reihe geschaltet ist.

Eine Reihenschaltung der Gleichspannungswandler kann eine Addition der Ausgangsgleichspannungen der Gleichspannungswandler erzielen. Eine Parallelschaltung der Gleichspannungswandler kann eine Erhöhung eines Ausgangsgleichstromes der Gleichspannungswandler erzielen. Eine Ausgangsgleichstrom-Erhöhung bei gleicher Ausgangsgleichspannung bewirkt eine Erhöhung der Ausgangsleistung der Gleichspannungswandler. So kann die Gleichspannungsladesäule verschiedene Ladespannungen und Ladeleistungen bereitstellen. Beispielsweise wird beim Laden einer Lithiumionenbatterie am Anfang mit maximaler Ladeleistung geladen und die Ladeleistung im weiteren Verlauf verringert. Die Gleichspannungsladesäule kann mehrere Ladepunkte umfassen. Je nach Verlauf kann die Steuereinheit Gleichspannungswandler von einem auf einen anderen Ladepunkt schalten. Die Gleichspannungsladesäule kann einen dritten, vierten und ggf. weitere Gleichspannungswandler umfassen. Die Reihen- bzw. Parallelschaltung aller Gleichspannungswandler erzielt im Wesentlichen die vorgenannten Wirkungen. Die erfindungsgemäße Gleichspannungsladesäule kann damit modular und somit einfach erweiterungsfähig ausgelegt werden. Dies ist zum Beispiel für die Errichtung in vorhandener öffentlicher sowie privater baulicher Infrastruktur von Vorteil.

Gemäß einer weiteren bevorzugten Ausführungsform umfasst die Gleichspannungsladesäule eine Schaltmatrix, die mit der Steuereinheit, mit wenigstens einem Eingangsanschluss jedes oder zumindest mehrerer Gleichspannungswandler und mit den Gleichspannungsladesäulen-Eingangsanschlüssen verbunden ist. Die Steuereinheit kann die Schaltmatrix derart ansteuern, dass alle Gleichspannungswandler entweder parallel oder in Reihe geschaltet sind.

Vorzugsweise umfasst die Gleichspannungsladesäule eine Isolationsmesseinheit, die mit den Gleichspannungsladesäulen-Eingangsanschlüssen und mit Erde bzw. Masse verbunden ist, wobei die Isolationsmesseinheit die Isolation der Gleichspannungsladesäule zu Erde misst und in Abhängigkeit der Messung die Gleichspannungsladesäule vom Elektrofahrzeug elektrisch trennt. Die Isolationsmesseinheit kann zur Beurteilung von Funktionsfähigkeit und Sicherheit der Gleichspannungsladesäule dienen und kann ferner frühzeitig Mängel aufzeigen.

Die Zentraleinheit kann eine zentrale Gleichspannungsquelle, einen Transformator und/oder einen Pufferspeicher umfassen oder einer Direkteinspeisung aus Photovoltaik-Erzeugung, die die Eingangsgleichspannung erzeugen und ein oder mehrere Gleichspannungsladesäulen zur Verfügung stellt. Die Isolationsmesseinheit kann vorteilhaft in jeder einzelnen Gleichspannungsladesäule angeordnet werden und nur die lokale Isolation in der jeweiligen Gleichspannungsladesäule ermitteln und diese ggf. vom Elektrofahrzeug trennen.

Ferner kann die Gleichspannungsladesäule nach einem der vorhergehenden Ansprüche mit einer Leistungsmesseinheit ausgestattet sein, die mit den Gleichspannungsladesäulen-Eingangsanschlüssen verbunden ist und die die an das Elektrofahrzeug abgegebene Leistung und/oder die Ladezeit ermittelt. Der Ladeenergiewert umfasst vorzugsweise das Produkt aus Ladezeit, bzw. Ladezeitwert, und Ladeleistung. Der Ladeenergiewert und/oder der Ladezeitwert können als Grundlage zur Berechnung eines Verkaufspreises für die Batterieladung und/oder als Kundeninformation dienen.

Darüber hinaus kann die Gleichspannungsladesäule eine Temperaturmesseinheit umfassen, die ausgelegt ist die Leistungsabgabe der Gleichspannungsladesäule in Abhängigkeit der gemessenen Temperatur zu steuern. Gleichspannungsladesäulen sollen vorzugsweise in einem Umgebungstemperaturbereich von -20°C bis 45°C volle Leistung abgeben können. Nach dem ersten Jouleschen Gesetz erzeugen stromführende Bauelemente der Gleichspannungsladesäule im Allgemeinen eine bestimmte Wärmeenergie. Ermittelt die Temperaturmesseinheit eine Umgebungstemperatur oder Gleichspannungsladesäulentemperatur über einem vorbestimmten Grenzwert, so kann die Temperaturmesseinheit mittels der Steuereinheit die Leistungsabgabe der Gleichspannungsladesäule und damit der stromführenden Bauelemente reduzieren, um etwa ein Überhitzen, Schmelzen oder in Brand geraten der Bauelemente zu vermeiden.

Gemäß einer Weiterbildung umfasst die Gleichspannungsladesäule einen Hauptschalter, der in Reihe zwischen dem ersten Gleichspannungswandler und einem der Gleichspannungsladesäulen-Eingangsanschlüsse geschaltet ist, wobei der Hauptschalter ausgelegt ist den ersten Gleichspannungswandler wahlweise mit einem der Gleichspannungsladesäulen-Eingangsanschlüsse zu verbinden oder davon zu trennen. Der wenigstens eine Hauptschalter kann dabei in Abhängigkeit eines Notaus-Signals, eines Systemfehlersignals oder der Isolation der Gleichspannungsladesäule zu Erde gesteuert sein. Die Gleichspannungsladesäule kann einen Notaus-Schalter umfassen, den ein Gleichstromladesäulennutzer bedient und der ein Notaus-Signal erzeugt. Die Steuereinheit und/oder die Zentraleinheit können das Systemfehlersignal im Falle einer Fehlfunktion erzeugen. Die Isolationsmesseinheit kann den Hauptschalter in Abhängigkeit der gemessenen Isolation steuern. Ferner kann je Gleichspannungsladesäulen-Eingangsanschluss ein Hauptschalter vorgesehen sein.

Der Begriff "verbunden" umfasst vorzugsweise die Bedeutung "elektrisch verbunden", "elektrisch leitend verbunden" und "gekoppelt".

### KURZBESCHREIBUNG DER ZEICHNUNGEN

Ausführungsbeispiele der Erfindung werden anhand der Zeichnungen und der nachfolgenden Beschreibung erläutert. Es zeigen:
- Fig. 1: eine Gleichspannungsladesäule gemäß einem nicht erfindungsgemäßen Beispiel
- Fig. 2: eine weitere Gleichspannungsladesäule gemäß einem nicht erfindungsgemäßen Beispiel und
- Fig. 3: eine weitere Gleichspannungsladesäule gemäß der Erfindung.

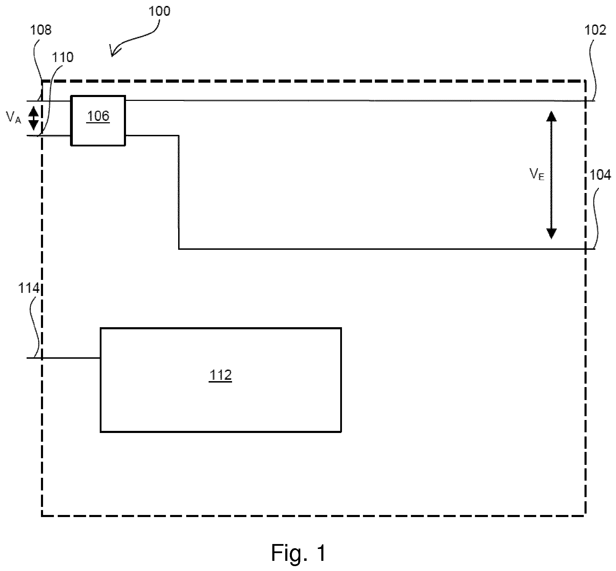

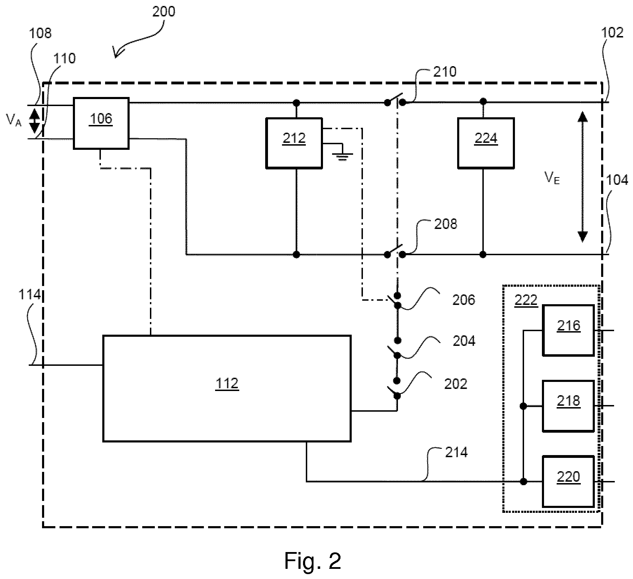

Die Beispiele der Abbildungen 1 und 2 fallen nicht unter den Wortlaut der Ansprüche, werden aber als das Verständnis der Erfindung erleichternd angesehen.

### AUSFUHRUNGSFORM DER ERFINDUNG

Fig. 1 zeigt eine Gleichspannungsladesäule 100 zum Laden einer Batterie eines Elektrofahrzeugs. Die Gleichspannungsladesäule 100 umfasst zwei Gleichspannungsladesäulen-Eingangsanschlüsse 102, 104 für eine Eingangsgleichspannung V_{E} mit einem ersten Spannungsbereich von 0V bis 200V oder von 0V bis 920 V, wobei am Gleichspannungsladesäulen-Eingangsanschluss 104 Massepotential 0V anliegt. Die Eingangsgleichspannung wird von einer Zentraleinheit bereitgestellt und kann sowohl +1000V gegen Erde oder +-500 V gegen Erde im Rahmen einer DC-Bus Versorgung aufgebaut sein.

Ferner zeigt Fig. 1 einen Gleichspannungswandler 106, der einen ersten Gleichspannungswandler bildet, zum Wandeln der Eingangsgleichspannung V_{E} in eine Ausgangsgleichspannung V_{A} mit einem zweiten Spannungsbereich von 1000 V. Der Gleichspannungswandler 106 weist außerdem zwei Gleichspannungsladesäulen-Ausgangsanschlüsse 108, 110 zum Bereitstellen der Ausgangsgleichspannung V_{A} an das Elektrofahrzeug auf, wobei am Gleichspannungsladesäulen-Ausgangsanschluss 108 ein Potential von 500V und am Gleichspannungsladesäulen-Ausgangsanschluss 110 ein Potential von -500V anliegt.

Die Gleichspannungsladesäule 106 weist ferner eine Steuereinheit 112 mit einer Ethernet-Schnittstelle 114 zur Kommunikation zwischen der Gleichspannungsladesäule 106 und der Zentraleinheit auf.

Fig. 2 zeigt eine Gleichspannungsladesäule 200, die die Bauelementen 102 bis 114 der Gleichspannungsladesäule 100 umfasst sowie einen Systemfehlerschalter 202, einen Notaus-Schalter 204, einen Isolationsschalter 206 und zwei Hauptschalter 208, 210. Die Schalter 202 bis 206 sind mit der Steuereinheit 112 verbunden. Die Hauptschalter 208, 210 sind jeweils in Reihe zwischen den Gleichspannungsladesäulen-Eingangsanschlüssen 102, 104 und dem Gleichspannungswandler 106 geschaltet. Wird einer der Schalter 202 bis 206 betätigt so erzeugen diese ein Signal, das die Hauptschalter 208, 210 derart betätigt, dass der Gleichspannungswandler 106 elektrisch von den Gleichspannungsladesäulen-Eingangsanschlüssen 102, 104 getrennt bzw. isoliert wird. Die Gleichspannungsladesäule 200 umfasst eine Isoliermesseinheit 212, die die Isolation der Gleichspannungsladesäule 200 zu Erde misst. Überschreitet die gemessene Isolation einen vorbestimmten Schwellwert, so betätigt die Isolationsmesseinheit 212 direkt, d.h. ohne Mitwirkung der Steuereinheit, den Isolationsschalter 206, der wiederum ein Isolationssignal erzeugt, das die Hauptschalter 208, 210 derart betätigt, dass der Gleichspannungswandler 106 elektrisch von den Gleichspannungsladesäulen-Eingangsanschlüssen 102, 104 getrennt, bzw. isoliert wird.

Der Notaus-Schalter 204 kann von einem Gleichstromladesäulennutzer in einem Notfall betätigt werden. Der Notaus-Schalter 204 erzeugt ein Notaus-Signal, das die Hauptschalter 208, 210 derart betätigt, dass der Gleichspannungswandler 106 elektrisch von den Gleichspannungsladesäulen-Eingangsanschlüssen 102, 104 getrennt, bzw. isoliert wird.

Der Systemfehlerschalter 202 kann von der Steuereinheit 112 betätigt werden und ein Systemfehlersignal erzeugen, das die Hauptschalter 208, 210 derart betätigt, dass der Gleichspannungswandler 106 elektrisch von den Gleichspannungsladesäulen-Eingangsanschlüssen 102, 104 getrennt, bzw. isoliert wird.

Die Steuereinheit 112 von Fig. 2 umfasst ferner eine Elektrofahrzeug-Kommunikationsschnittstelle 214, die eine zweite Kommunikationsschnittstelle bildet, zur Kommunikation der Gleichspannungsladesäule 200 mit dem Elektrofahrzeug. Die Elektrofahrzeug-Kommunikationsschnittstelle umfasst drei Protokollschnittstellen für das CCS-Protokoll 216, für das Chademo-Protokoll 218 und für das Tesla-Supercharger-Protokoll 220. Die drei Protokollschnittstellen sind als Computer 222 implementiert. Der Computer 222 und/oder die Steuereinheit 112 umfassen einen Mini-PC oder einen Einplatinenrechner, wie Raspberry Pi, Arduino oder dergleichen.

Die Gleichspannungsladesäule 200 umfasst ferner eine Leistungsmesseinheit 224, die mit den Gleichspannungsladesäulen-Eingangsanschlüssen 102 und 104 verbunden ist und die die an das Elektrofahrzeug abgegebene Leistung und/oder die Ladezeit ermittelt. Der Ladeenergiewert umfasst das Produkt aus Ladezeit bzw. Ladezeitwert und Ladeleistung. Der Ladeenergiewert und/oder der Ladezeitwert dienen als Grundlage zur Berechnung eines Verkaufspreises für eine Batterieladung und/oder als Kundeninformation.

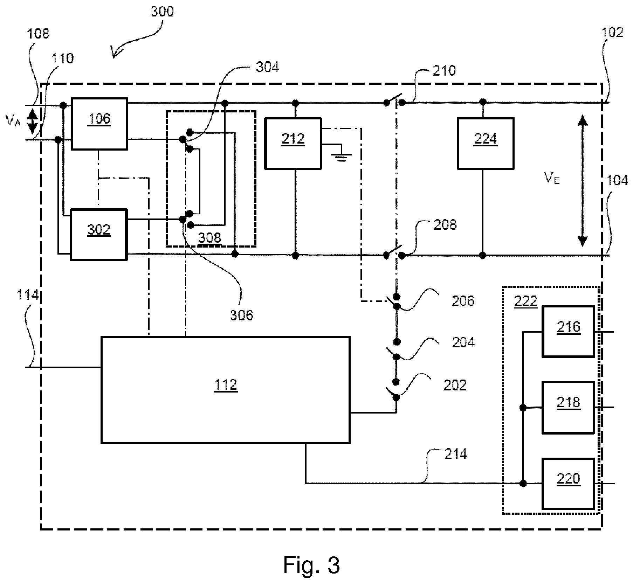

Fig. 3 zeigt eine Gleichspannungsladesäule 300, die die Bauelementen 102 bis 114 der Gleichspannungsladesäule 100, die Bauelement 202 bis 224 der Gleichspannungsladesäule 200 sowie einen zweiten Gleichspannungswandler 302 umfasst. Der zweite Gleichspannungswandler 302 wird wahlweise parallel oder in Reihe geschaltet zum Gleichspannungswandler 106 betrieben.

Die Gleichspannungsladesäule 300 umfasst zwei Schalter 304, 306, die eine Schaltmatrix 308 bilden. Der Schalter 304 ist mit einem ersten Eingangsanschluss des Gleichspannungswandlers 106 verbunden und verbindet den ersten Eingangsanschluss des Gleichspannungswandlers 106 wahlweise mit einem ersten Eingangsanschluss des Gleichspannungswandlers 302 oder mit dem Gleichspannungssäulen-Eingangsanschluss 104.

Der Schalter 306 ist mit dem ersten Eingangsanschluss des Gleichspannungswandlers 302 verbunden und verbindet den ersten Eingangsanschluss des Gleichspannungswandlers 302 wahlweise mit dem ersten Eingangsanschluss des Gleichspannungswandlers 106 oder mit Gleichspannungssäulen-Eingangsanschluss 102.

Die Schalter 304 und 306 werden von der Steuereinheit 112 derart betätigt, dass die Gleichspannungswandler 106, 302 entweder parallel oder in Reihe geschalten sind.

Eine Reihenschaltung der Gleichspannungswandler 106, 302 erzielt eine Addition der Ausgangsgleichspannungen der Gleichspannungswandler 106, 302. Eine Parallelschaltung der Gleichspannungswandler 106, 302 erzielt eine Erhöhung eines Ausgangsgleichstromes der Gleichspannungswandler 106, 302. Eine Ausgangsgleichstrom-Erhöhung bei gleicher Ausgangsgleichspannung V_{A} bewirkt eine Erhöhung der Ausgangsleistung der Gleichspannungswandler 106, 302. So kann die Gleichspannungsladesäule 300 verschiedene Ladespannungen und Ladeleistungen bereitstellen. Beispielsweise wird beim Laden einer Lithiumionenbatterie am Anfang mit maximaler Ladeleistung geladen und die Ladeleistung im weiteren Verlauf verringert.

Alle Schalter 202 bis 210 und 304, 306 können als Relais, Schütz oder Halbleiterschalter, z.B. FET oder Bipolar-Transistor, ausgelegt sein.

## Patentansprüche

1. System mit einer Zentraleinheit und mit mehreren Gleichspannungsladesäulen ( 300) zum Laden von Elektrofahrzeugen, wobei die Zentraleinheit konfiguriert ist, die Gleichspannungsladesäulen ( 300) zu steuern und wobei die Gleichspannungsladesäulen ( 300) jeweils umfassen:
- zwei Gleichspannungsladesäulen-Eingangsanschlüsse (102, 104) für eine Eingangsgleichspannung (Vε) mit einem ersten Spannungsbereich bereitgestellt von der Zentraleinheit;
- einen ersten Gleichspannungswandler (106) zum Wandeln der Eingangsgleichspannung (Vε) in eine Ausgangsgleichspannung (V_{A}) mit einem zweiten Spannungsbereich;
- zwei Gleichspannungsladesäulen-Ausgangsanschlüsse (108, 110) zum Bereitstellen der Ausgangsgleichspannung (V_{A}) an jeweils ein Elektrofahrzeug;
- eine Steuereinheit (112) mit einer ersten Kommunikationsschnittstelle (114) zur Kommunikation zwischen den Gleichspannungsladesäulen (300) und der Zentraleinheit
**dadurch gekennzeichnet, dass**
die Gleichspannungsladesäulen ( 300) jeweils einen zweiten Gleichspannungswandler (302) umfassen, der wahlweise zum ersten Gleichspannungswandler (106) parallel oder in Reihe geschaltet ist.

2. System nach Anspruch 1, wobei die Steuereinheit (112) über die erste Kommunikationsschnittstelle (114) wenigstens eine der folgenden Informationen überträgt oder empfängt:
- Status der Gleichspannungsladesäulen,
- Daten über die maximal von den Gleichspannungsladesäulen abgegebene Leistung,
- Ladeenergiewert,
- Ladezeitwert,
- Elektrofahrzeugidentifikationsinformation,
- Softwareupdate-Daten.

3. System nach Anspruch 1 oder 2, wobei die Steuereinheit an der ersten Kommunikationsschnittstelle (114) einen seriellen Kommunikationsstandard, insbesondere Ethernet, unterstützt.

4. System nach einem der vorhergehenden Ansprüche, wobei die Steuereinheit (112) eine zweite Kommunikationsschnittstelle (214) zur Kommunikation zwischen den Gleichspannungsladesäulen ( 300) und Elektrofahrzeugen umfasst.

5. System nach Anspruch 4, wobei die Steuereinheit (112) an der zweiten Kommunikationsschnittstelle (214) wenigstens zwei verschiedene Kommunikationsprotokolle (216, 218, 220) an einem Ladepunkt unterstützt.

6. System nach Anspruch 1 mit einem dritten und vierten Gleichspannungswandler (106; 302), wobei alle Gleichspannungswandler (106; 302) wahlweise parallel oder in Reihe geschaltet sind.

7. System nach Anspruch 5 oder 6, mit einer Schaltmatrix (308), die mit der Steuereinheit (112), mit wenigstens einem Eingangsanschluss jedes Gleichspannungswandlers (106; 302) und mit den Gleichspannungsladesäulen-Eingangsanschlüssen (102, 104) verbunden ist, wobei die Steuereinheit (112) die Schaltmatrix (308) derart ansteuert, dass alle Gleichspannungswandler (106; 302) entweder parallel oder in Reihe geschaltet sind.

8. System nach einem der vorhergehenden Ansprüche mit einer Isolationsmesseinheit (212), die mit den Gleichspannungsladesäulen-Eingangsanschlüssen (102, 104) und mit Erde verbunden ist, wobei die Isolationsmesseinheit (212) die Isolation der Gleichspannungsladesäulen ( 300) zu Erde misst und in Abhängigkeit der Messung die Gleichspannungsladesäulen ( 300) von den Elektrofahrzeugen elektrisch trennt.

9. System nach einem der vorhergehenden Ansprüche mit einer Leistungsmesseinheit (224), die mit den Gleichspannungsladesäulen-Eingangsanschlüssen (102, 104) verbunden ist und die die an das Elektrofahrzeug abgegebene Leistung und/oder die Ladezeit ermittelt.

10. System nach einem der vorhergehenden Ansprüche mit einer Temperaturmesseinheit, die ausgelegt ist die Leistungsabgabe der Gleichspannungsladesäulen ( 300) in Abhängigkeit der gemessenen Temperatur zu steuern.

11. System nach einem der vorhergehenden Ansprüche mit wenigstens einem Hauptschalter (208, 210), der in Reihe zwischen dem ersten Gleichspannungswandler (106; 302) und einem der Gleichspannungsladesäulen-Eingangsanschlüsse (102, 104) geschaltet ist, wobei der Hauptschalter (208, 210) ausgelegt ist den ersten Gleichspannungswandler (106; 302) wahlweise mit einem der Gleichspannungsladesäulen-Eingangsanschlüsse (102, 104) zu verbinden oder davon zu trennen.

12. System nach Anspruch 11, wobei der wenigstens eine Hauptschalter (208, 210) in Abhängigkeit eines Notaus-Signals, eines Systemfehlersignals oder der Isolation der Gleichspannungsladesäulen ( 300) zu Erde gesteuert wird.

## Claims

1. A system having a central processing unit and having a plurality of direct voltage charging posts (300) for charging electric vehicles, the central processing unit being configured to control the direct voltage charging posts (300) and the direct voltage charging posts (300) comprising in each case:
- two direct voltage charging post input terminals (102, 104) for an input direct voltage (Vε) having a first voltage range provided by the central processing unit;
- a first direct voltage converter (106) for converting the input direct voltage (Vε) into an output direct voltage (V_{A}) having a second voltage range;
- two direct voltage charging post output terminals (108, 110) for providing the output direct voltage (V_{A}) to one electric vehicle at a time;
- a control unit (112) having a first communication interface (114) for communication between the direct voltage charging posts (300) and the central processing unit
**characterized in that**
the direct voltage charging posts (300) each comprise a second direct voltage converter (302), which is selectively connected in parallel or in series to the first direct voltage converter (106).

2. The system according to claim 1, wherein the control unit (112) transmits or receives at least one of the following pieces of information via the first communication interface (114):
- status of the direct voltage charging posts,
- data regarding the maximum power output by the direct voltage charging posts,
- charging energy value,
- charging time value,
- electric vehicle identification information,
- software update data.

3. The system according to claim 1 or 2, wherein the control unit supports a serial communication standard, in particular Ethernet, at the first communication interface (114).

4. The system according to any of the preceding claims, wherein the control unit (112) comprises a second communication interface (214) for communication between the direct voltage charging posts (300) and electric vehicles.

5. The system according to claim 4, wherein the control unit (112) at the second communication interface (214) supports at least two different communication protocols (216, 218, 220) at a charging point.

6. The system according to claim 1, comprising a third and fourth direct voltage converter (106; 302), wherein all direct voltage converters (106; 302) are selectively connected in parallel or in series.

7. The system according to claim 5 or 6, comprising a switching matrix (308) which is connected to the control unit (112), to at least one input terminal of each direct voltage converter (106; 302) and to the direct voltage charging post input terminals (102, 104), wherein the control unit (112) controls the switching matrix (308) in such a manner that all direct voltage converters (106; 302) are connected either in parallel or in series.

8. The system according to any of the preceding claims, comprising an isolation measuring unit (212) which is connected to the direct voltage charging post input terminals (102, 104) and to ground, wherein the isolation measuring unit (212) measures the isolation of the direct voltage charging posts (300) to ground and, depending on the measurement, electrically disconnects the direct voltage charging posts (300) from the electric.

9. The system according to any of the preceding claims, comprising a power measuring unit (224) which is connected to the direct voltage charging post input terminals (102, 104) and which determines the power which is output to the electric vehicle and/or the charging time.

10. The system according to any of the preceding claims, comprising a temperature measuring unit designed to control the power output of the direct voltage charging posts (300) on the basis of the measured temperature.

11. The system according to any of the preceding claims, comprising at least one main switch (208, 210) connected in series between the first direct voltage converter (106; 302) and one of the direct voltage charging post input terminals (102, 104), wherein the main switch (208, 210) is designed to selectively connect or disconnect the first direct voltage converter (106; 302) to or from one of the direct voltage charging post input terminals (102, 104).

12. The system according to claim 11, wherein the at least one main switch (208, 210) is controlled on the basis of an emergency stop signal, a system fault signal or the isolation of the direct voltage charging posts (300) to ground.

## Revendications

1. Système comportant une unité centrale et comportant plusieurs colonnes de charge à tension continue (300) permettant de charger des véhicules électriques, dans lequel l'unité centrale est configurée pour commander les colonnes de charge à tension continue (300) et dans lequel les colonnes de charge à tension continue (300) comprennent respectivement :
- deux bornes d'entrée de colonne de charge à tension continue (102, 104) pour une tension continue d'entrée (Vε) comportant une première plage de tension fournie par l'unité centrale ;
- un premier convertisseur de tension continue (106) permettant de convertir la tension continue d'entrée (Vε) en une tension continue de sortie (V_{A}) comportant une seconde plage de tension ;
- deux bornes de sortie de colonne de charge à tension continue (108, 110) permettant de fournir la tension continue de sortie (V_{A}) à respectivement un véhicule électrique ;
- une unité de commande (112) comportant une première interface de communication (114) pour la communication entre les colonnes de charge à tension continue (300) et l'unité centrale
. **caractérisé en ce que**
les colonnes de charge à tension continue (300) comprennent respectivement un deuxième convertisseur de tension continue (302) qui est monté au choix en parallèle ou en série avec le premier convertisseur de tension continue (106).

2. Système selon la revendication 1, dans lequel l'unité de commande (112) transmet ou reçoit au moins l'une des informations suivantes par l'intermédiaire de la première interface de communication (114) :
- état des colonnes de charge à tension continue,
- données concernant la puissance maximale envoyée par les colonnes de charge à tension continue,
- valeur d'énergie de charge,
- valeur de temps de charge,
- informations d'identification de véhicule électrique,
- données de mise à jour de logiciel.

3. Système selon la revendication 1 ou 2, dans lequel l'unité de commande supporte un standard de communication série, en particulier Ethernet, sur la première interface de communication (114).

4. Système selon l'une des revendications précédentes, dans lequel l'unité de commande (112) comprend une seconde interface de communication (214) pour la communication entre les colonnes de charge à tension continue (300) et les véhicules électriques.

5. Système selon la revendication 4, dans lequel l'unité de commande (112) supporte au moins deux protocoles de communication (216, 218, 220) différents en un point de charge sur la seconde interface de communication (214).

6. Système selon la revendication 1 comportant un troisième et un quatrième convertisseur de tension continue (106 ; 302), dans lequel tous les convertisseurs de tension continue (106 ; 302) sont montés au choix en parallèle ou en série.

7. Système selon la revendication 5 ou 6, comportant une matrice de commutation (308) qui est connectée à l'unité de commande (112), à au moins une borne d'entrée de chaque convertisseur de tension continue (106 ; 302) et aux bornes d'entrée de colonne de charge à tension continue (102, 104), dans lequel l'unité de commande (112) commande la matrice de commutation (308) de telle sorte que tous les convertisseurs de tension continue (106 ; 302) sont montés soit en parallèle, soit en série.

8. Système selon l'une des revendications précédentes comportant une unité de mesure d'isolation (212) qui est connectée aux bornes d'entrée de colonne de charge à tension continue (102, 104) et à la terre, dans lequel l'unité de mesure d'isolation (212) mesure l'isolation des colonnes de charge à tension continue (300) par rapport à la terre et sépare électriquement les colonnes de charge à tension continue (300) des véhicules électriques en fonction de la mesure.

9. Système selon l'une des revendications précédentes comportant une unité de mesure de puissance (224) qui est connectée aux bornes d'entrée de colonne de charge à tension continue (102, 104) et qui détermine la puissance envoyée au véhicule électrique et/ou le temps de charge.

10. Système selon l'une des revendications précédentes comportant une unité de mesure de température qui est configurée pour commander l'envoi de puissance des colonnes de charge à tension continue (300) en fonction de la température mesurée.

11. Système selon l'une des revendications précédentes comportant au moins un commutateur principal (208, 210) qui est monté en série entre le premier convertisseur de tension continue (106 ; 302) et l'une des bornes d'entrée de colonne de charge à tension continue (102, 104), dans lequel le commutateur principal (208, 210) est configuré pour connecter sélectivement le premier convertisseur de tension continue (106 ; 302) à l'une des bornes d'entrée de colonne de charge à tension continue (102, 104) ou pour le séparer de celle-ci.

12. Système selon la revendication 11, dans lequel l'au moins un commutateur principal (208, 210) est commandé en fonction d'un signal d'arrêt d'urgence, d'un signal d'erreur de système ou de l'isolation des colonnes de charge à tension continue (300) par rapport à la terre.
